# EUROPEAN PATENT SPECIFICATION

(11) **EP 1 697 184 B1**
(45) Date of publication and mention of the grant of the patent: **20.06.2007**
(21) Application number: 04800368.5
(22) Date of filing: 23.11.2004
(51) Int. Cl.: B60S 9/04

(54) **SUPPORT LEG ARRANGEMENT**
STÜTZBEINANORDNUNG
DISPOSITIF DE PIED DE SUPPORT

(30) Priority: 28.11.2003 SE 0303188
(43) Date of publication of application: 06.09.2006
(73) Proprietor: LAGAB AB, S-312 22 Laholm (SE)
(72) Inventor: ANDERSSON, Holger, S-312 95 Laholm (SE)
(74) Representative: Andersson, Mikael Per Robert
(86) International application number: PCT/SE2004/001707
(87) International publication number: WO 2005/051735

(56) References cited:
- EP-A1- 0 163 621
- EP-A1- 0 537 861
- EP-A1- 0 891 889
- WO-A1-91/17065

## Description

### FIELD OF THE INVENTION

The present invention relates to an arrangement in connection with a support leg for a load carrier, such as a loading platform, said support leg being connected to a hinge means arranged on the load carrier for movement between a retracted or inwards folded position and an extended or outwards folded position by pivoting about a first axis, the arrangement comprising a locking device for locking the support leg at least in the extended position.

### BACKGROUND ART

Some lorries have removable load carriers in the form of, for instance, loading platforms so as to allow effective transport and handling of goods. The load carrier can be carried on the lorry for transport and also be put down for loading/unloading, after which the lorry can be used for transport of another load carrier.

To put down the load carrier, the lorry first raises the load carrier by a lifting appliance, after which support legs arranged on the load carrier are extended and locked in the extended position. As a rule, a load carrier comprises four support legs, one in each corner of the load carrier. The support legs are usually telescopically extensible to allow setting of the height desired for putting down the load carrier, and displaceable in the transverse direction of the loading platform to allow movement of the chassis of the truck under the load carrier. Subsequently the lorry lowers the load carrier, which is then supported by the support legs. The lorry is then free to drive away.

A common type of support leg is connected to a hinge means of the load carrier for movement between a retracted position and an extended position merely by pivoting. US 3,643,975 relates to such an arrangement for locking a support leg to a trailer. The leg is pivotally connected to the trailer. A first locking means is mounted on the leg and movable in the longitudinal direction of the leg. The locking means which can be compared to a cotter cooperates with a recess in the trailer by the action of a tension spring.

A further variant of a support leg is disclosed in European Patent Publication EP-A-891 889. The support leg which is pivotable in a hinge means between a retracted and an extended position comprises a locking device for locking the leg in the extended position. The locking device comprises a first spring-loaded locking means which is mounted on the support leg in such a manner as to be movable along the longitudinal axis of the support leg. A second locking means is arranged in the hinge means. To lock the support leg, the first locking means cooperates with the hinge means so that the locking means is moved along the longitudinal axis of the support leg, whereby the first locking means engages the second locking means.

Common features of these support legs according to prior-art technique are that they are pivotable between a first retracted position and a second extended position and that the support leg is locked in one of the two positions by a locking means which is arranged to act in the longitudinal direction of the support leg by means of a spring-loaded cotter.

Such solutions may involve a certain degree of susceptibility to defects in materials, in particular to defects in the materials in the spring load. If the spring mechanism of the cotter should fail, this results in the possibility of the cotter falling out, thereby allowing the loading platform to tilt in an uncontrolled manner. This may involve a risk of the staff being injured when handling the loading platform and staying in and around the same in connection with loading/unloading as well as goods being damaged in and around the loading platform. The known solutions further comprise a large number of movable parts that are exposed to a very stressful environment in the form of, for example, great vibrating forces, road dust, road salt, moisture and fat. These movable parts require regular maintenance to prevent breakdown.

The large number of parts also frequently mean that the overall height, i.e. the vertical distance between the load carrier and the lorry, is relatively great.

### OBJECTS OF THE PRESENT INVENTION

An object of the present invention is to provide an arrangement in connection with a support leg for a load carrier, such as a loading platform, said arrangement allowing the support leg to be easily pivoted between a retracted and an extended position and locked at least in the extended position.

The arrangement should comprise a small number of parts and be simple, but reliable in construction.

The arrangement should further render a reduced overall height possible.

### SUMMARY OF THE INVENTION

To achieve at least one of the above objects and also other objects that will be evident from the following description, an arrangement in connection with a support leg for a load carrier is provided according to the present invention, with the features stated in claim 1. Preferred embodiments are evident from claims 2-8. With reference to claim 9, the invention also relates to use of such an arrangement.

More specifically, an arrangement in connection with a support leg for a load carrier, such as a loading platform, is provided, said support leg being connected to a hinge means arranged on the load carrier for movement between a retracted position and an extended position by pivoting about a first axis, the arrangement comprising a locking device for locking the support leg at least in the extended position. The arrangement is characterised in that the locking device comprises an arm which is arranged on the hinge means and pivotable about a second axis which is parallel to the first axis, said arm being adapted to lock the support leg in the extended position by cooperation with a recess formed in a cam which is arranged on the support leg.

An arrangement according to the invention comprises a very small number of parts and is very simple in construction. This makes it easy and inexpensive to manufacture, mount and service. Moreover, the arrangement is very easy to handle since the arm that cooperates with the recess formed in the cam for locking the support leg is pivotable about an axis which is parallel to the axis about which the support leg is intended to be pivoted. The prior-art technique which requires a vertical movement of a locking mechanism combined with a pivoting movement of the support leg has thus been reduced to merely pivoting movements of the support leg and the locking device, respectively. The pivoting movements occur in the same plane or in parallel planes. This facilitates handling significantly. The simple construction results in a very simple and smooth pivoting movement, thus implying that the overall height can be small compared with prior-art solutions.

Preferably, the arm in the extended position of the support leg is adapted to lock, by wedge action, the support leg against the recess formed in the cam. Locking by wedge action is very efficient and easy since the locking force increases the higher the load exerted on the construction in one direction. As a result, the support leg will be locked in a very stable manner and allow safe parking of the load carrier.

The cam can easily be provided by the end of the support leg being formed with a profile suitable for cooperation with an arm arranged on the hinge means.

The arm can be arranged in such a manner as to strive, by its own weight, towards engagement with the cam and its recess. As a result, the person retracting/extending the support leg will only have to focus on holding the support leg during the pivoting movement since the arm will automatically follow the cam and fall into the recess and lock the support leg. This entails very easy handling of the arrangement. The same effect can be achieved if the arm is arranged to cooperate with a lever spring which arranges the arm in engagement with the cam and its recess. This results in guiding of the support leg at least towards and away from the position in which the support leg is locked in its extended position.

It is preferred for the support leg in its extended position to make an angle α relative to a vertical axis in the range 2-5°, most preferred 3-4°. By the angle α is meant "excessive pivoting" of the support leg past the vertical axis. The excessive pivoting facilitates handling if the support leg is to be pivoted from an extended position to a retracted position. When the load carrier is raised again, the longitudinal axis of the support leg will in fact, by the own weight of the support leg, coincide with the vertical axis, which implies that a play is formed, corresponding to the angle α, within which the support leg can be moved manually to release a wedge action between the arm and the recess of the cam.

It is preferred for the cam to comprise an additional recess which, by cooperation with the arm, also can lock the support leg in the retracted position. This means that no separate locking device is required for the retracted position. To provide safe and stable locking, it is further preferred for the arm in the retracted position of the support leg to be arranged to lock, by wedge action, the support leg against the additional recess formed in the cam.

In one embodiment of the arrangement, the first axis and the second axis may coincide in a common axis. The common axis may consist of, for instance, the axis in the hinge means about which the support leg is arranged to be pivoted. In such a solution, the arm can be integrated in the common axis while the cam is arranged in the hinge means.

The invention also relates to use of such an arrangement.

### DESCRIPTION OF DRAWINGS

In the following the invention will be described in more detail for exemplifying purposes with reference to the accompanying drawings which illustrate a currently preferred embodiment.
Fig. 1 is a schematic view of an arrangement according to the invention in connection with a support leg which is in a locked retracted position.
Fig. 2 is a schematic enlarged view, seen in a vertical section through the hinge means, of the upper end of the support leg with the support leg in its extended locked position.
Fig. 3 is a schematic top plan view, seen in a horizontal section through the hinge means, which shows the cooperation of the locking device with the hinge means and the support leg, respectively, in the extended position of the support leg.
Figs 4a-4d are schematic enlarged views in the form of a vertical section through the hinge means when the support leg is in a locked retracted position, in a central position while pivoting towards the extended position, in a locked extended position, and in a central position while pivoting towards the retracted position.

### TECHNICAL DESCRIPTION

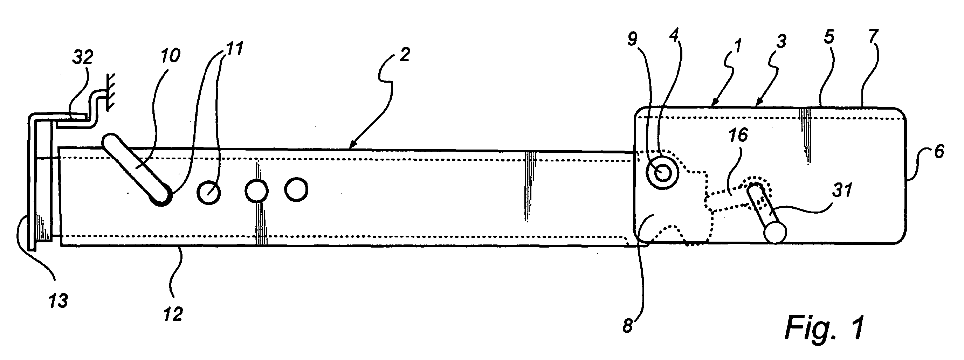

With reference to Fig. 1, an arrangement according to the invention is shown, comprising a support leg 2 which is connected to a hinge means 3 via a first axis 4. The support leg 2 is shown in a retracted position. The hinge means 3 is intended to be mounted on a load carrier (not shown), such as a loading platform. The hinge means 3 is preferably mounted on the load carrier so as to be movable in the transverse direction of the load carrier. The hinge means 3 can thus be pulled out from the load carrier in connection with extension of the support leg 2 to increase the distance between two support legs arranged on either side of the load carrier, which facilitates moving of the chassis of the truck under the load carrier.

The hinge means 3 consists, in its simplest embodiment, of a U section 5 which is oriented so that its legs 6 extend vertically downwards parallel to the desired pivot plane of the support leg. The web 7 of the U section 5 is directed upwards. The above-mentioned first axis 4 extends between the legs 6 of the hinge means 3. The first axis 4 is oriented perpendicular to the desired pivot plane of the support leg. In the example shown, the axis 4 consists of a through shaft, but it may also consist of, for instance, a pin or some other pivotable attachment. The support leg 2, which will be described in detail below, is arranged on the first axis 4 so as to be pivotable between the shown first retracted position, in which the support leg 2 preferably is in a horizontal position with part of its length held in the hinge means 3, and an extended position, in which the support leg 2 is, for instance, in a practically vertical position, with part of its length still held in the hinge means 3.

The support leg 2 suitably consists of a continuously cast or welded section, such as a U section, H section, I section or box section. The section should have such a cross-sectional geometry that the support leg 2 wholly or partly with its upper end 8, i.e. the end intended to be attached to the hinge means 3, can be accommodated in the hinge means while pivoting between its retracted and extended position.

The support leg 2 comprises at its upper end 8 a hole 9 for holding the first axis 4 of the hinge means 3. The hole 9, or alternatively the first axis 4, can be provided with some kind of friction-reducing bearing. It will, of course, be appreciated that the upper end 8 of the support leg 2 is designed according to how the pivotable attachment to the first axis 4 is designed.

The support leg 2 is preferably telescopic and manually lockable in a number of distinct lengths by means of, for instance, a cotter 10 which engages in a suitable hole in a series of holes 11.

Furthermore the support leg 2 comprises at its lower end 12 a supporting surface 13 which is adapted to act against the base on which the load carrier is put down. The supporting surface 13 can be rigidly attached to the support leg 2 or alternatively be hingedly attached. The supporting surface 13 can also be spring loaded. A hingedly attached, or alternatively, spring-loaded supporting surface 13 allows a certain degree of correction for irregularities on a base on which the load carrier is parked.

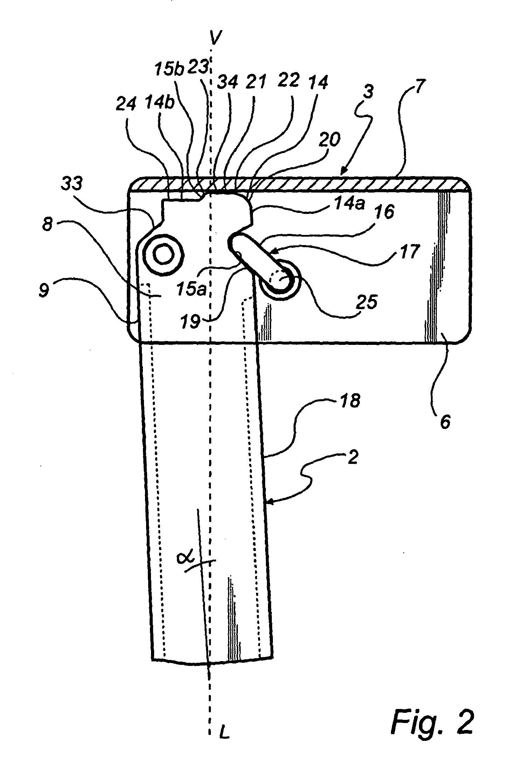

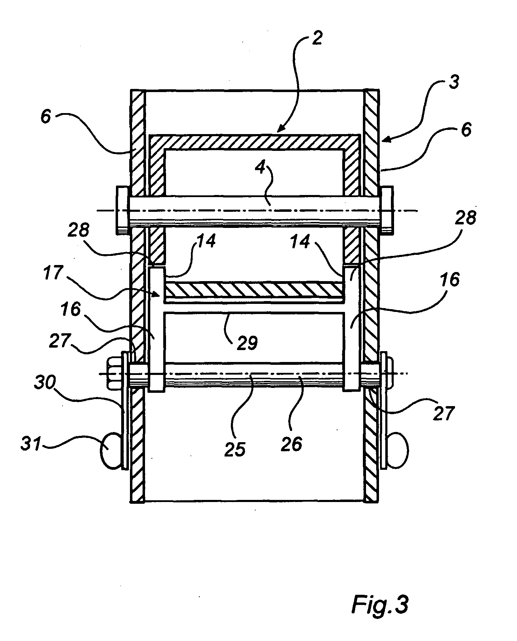

With reference to Fig. 2, the support leg 2 has further at its upper end 9 a profile which forms a cam 4 with recesses 15a, 15b. The cam 14 and its recesses 15a, 15b are adapted to cooperate with an arm 16 in a locking device 17 which is adapted to lock the support leg 2 at least in its extended position. The locking device 17 will be described below in detail, with reference to Fig. 3.

The cam 14 is advantageously arranged at least on the side of the support leg 2 which faces the leg 6 of the hinge means 3 which faces away from the load carrier (not shown). In Fig. 2, this leg has been removed for illustrative purposes. For reasons of manufacture, it is preferred for a corresponding cam 14 with recesses 15a, 15b to be arranged also on the opposite side of the support leg 2. The support leg 2 can thus be mounted on both the right and the left side of the load carrier.

To facilitate the geometric description of the cam 14, it will below be described with the support leg 2 in a vertical position. The cam 14 can be divided into a first cam portion 14a and a second cam portion 14b depending on whether the support leg 2 is lockable only in its extended position, or alternatively only in its retracted position, or in its extended as well as in its retracted position.

The first cam portion 14a is adapted to lock the support leg 2 in its extended position and comprises a recess 15a in a wall on the long side 18 of the support leg. The recess 15a has such a profile that the arm 16 arranged in the locking device 17 can be pivoted, in the extended position of the support leg 2, to engage a lower surface 19 in the recess 15a. The recess 15a can advantageously have a right-angled profile which is inclined at an angle to the longitudinal axis L of the support leg preferably within 45-50°. The recess 15a passes, towards the upper end 9 of the support leg 2, into a soft single-curved profile 20 at an angle of the curve of approx. 90° which extends up to the upper short side 21 of the support leg, where it passes into a line 22 which is either straight or slightly convex. The line 22 is, depending on its shape, intended to form either a supporting surface 34 or a supporting point when engaging the web 7 of the hinge means 3 in the extended position of the support leg 2. This engagement takes up vertical forces when the support leg 2 is in its extended position.

The second cam portion 14b is adapted to lock the support leg 2 in its retracted position and can thus be excluded if the support leg 2 is merely intended to be locked in its extended position. Moreover, it can be combined with the first cam portion 14a if the support leg 2 is lockable in its extended as well as retracted position. The second cam portion 14b is arranged on the upper short side 21 of the support leg 2 and preferably connects directly to the first cam portion 14a by a soft single-curved profile 23 at an angle of the curve of approx. 90° which passes into, for instance, a straight line 24. This single-curved profile 23 can be compared to a recess 15b.

The cam 14 and its recesses 15a, 15b in the first cam portion 14a and the second cam portion 14b, respectively, can, of course, be designed in various ways, of which those described above are only one example. The cam 14 can also be formed with additional recesses (not shown) for locking the support leg 2 in additional positions. The essential thing is that the cam 14 and its recesses 15a, 15b have such a profile as to allow the arm 16 of the locking device 17 to be turned into and out of the recesses 15a, 15b in such a manner that the arm 16 in the locked positions of the support leg 2, by wedge action, locks against a surface in the recesses 15a, 15b. The other surfaces of the profile of the cam 14 are adapted to guide the arm 16.

As mentioned above, the hinge means 3 comprises a locking device 10 having an arm 16 which is pivotable about a second axis 25. This can be achieved in various ways, of which a variant will be described below with reference to Fig. 3.

The second axis 25 consists of a continuous shaft 26 which is arranged in the hinge means 3 in such a manner as to be pivotably held in two opposing holes 27 in the legs 6 of the hinge means 3, in such a manner that the shaft 26 is oriented parallel to the first axis 4 of the hinge means. The locking device 17 comprises two arms 16 which are arranged between the legs 6 of the hinge means 3. The arms 16 are arranged in such a manner that a turning of the shaft 26 causes a corresponding turning of the arms 16. The arms 16 are further arranged on the shaft 26 in such a manner that their free ends 28 can cooperate with the cam 14 of the support leg 2. The free end 28 of each arm 16 suitably has a profile which can easily follow the profile of the cam 14 without unnecessary friction.

By the support leg 2 advantageously consisting of a box section, where the cam 14 is arranged in the walls thereof, the arms 16 are advantageously arranged on the shaft 26 in a position adjacent to a leg 6 of the hinge means 3. If only one arm 28 is used, this is advantageously arranged adjacent to the leg 6 which is directed away from the load carrier.

If the locking device 17 comprises two arms 16, i.e. one for each cam 14 in the support leg 2, they can, as illustrated, be interconnected by a strut 29 which extends parallel to the shaft 26. This gives the locking device 17 increased torsional rigidity.

Moreover, the shaft 26 is, at its one end extending out through the leg 6 in the hinge means 3 which is directed away from the load carrier, advantageously provided with some kind of gripping surface 30, preferably a handle in the form of a crank with a horizontally projecting handle 31. A handle 31 allows greater forces to be applied if the movement of the arms 16 should jam.

The second axis 25 has above been exemplified as a continuous shaft 26. Of course, it may also be designed as a pin or in the form of some other pivotable attachment. The essential thing is that it is designed so as to allow the arm/arms 16 to follow the cam 14. Moreover, the arm/arms 16 should be manually pivotable and operable from the outside of the hinge means 3.

If the arm 16 merely by its own weight is arranged to strive towards engagement with the cam 14 and its recesses 15a, 15b, it may be advantageous for the hinge means 3 to be provided with a catch (not shown) which prevents the arm 16 from moving upwards and past a vertical position. The catch may, for instance, consist of a pin arranged on the inside of the hinge means and stopping the upward movement of the arm at a certain angle from a vertical position. Such an angle can be, for example, 5°. As a result, the arm will by its own weight always strive to fall back into engagement with the cam.

As an alternative to such a catch, a lever spring (not shown) can be arranged between the arm and the second axis. The lever spring, which may consist of, for instance, a torsion spring, biases the arm into engagement with the cam and its recesses. The lever spring should be so soft that an operator can operate the locking device with only little hand power.

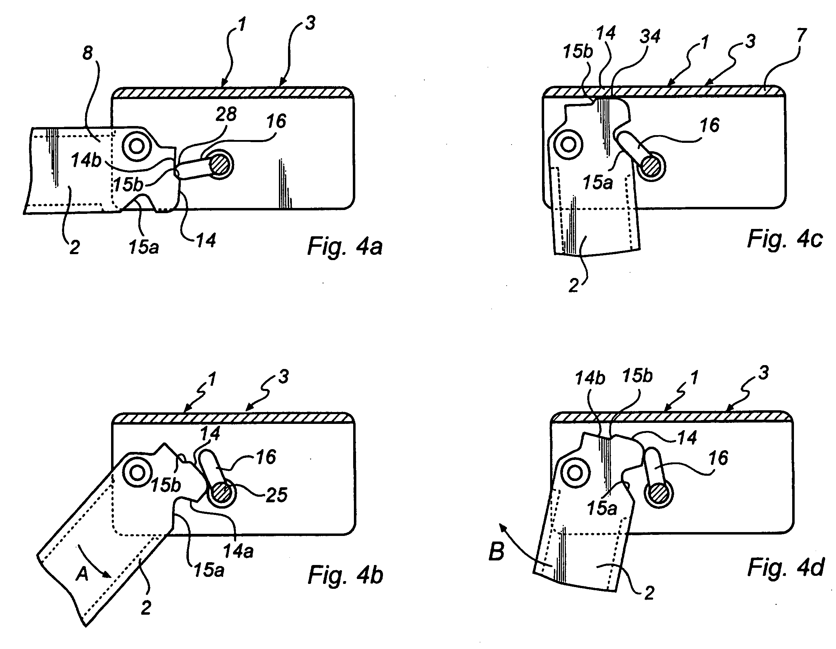

In the following, the function of the arrangement 1 will be described with reference to Figs 4a-4d, which illustrate the cooperation of the arm 16 with the cam 14 and its recesses 15a, 15b seen in a vertical section through the hinge means 3. It will be appreciated that the description below assumes the load carrier to be in a raised position relative to the lorry.

Starting in Fig. 4a, the support leg 2 is illustrated in a retracted locked position. The support leg 2 is in a substantially horizontal position with its upper end 8 partly held within the hinge means 3. The arm 16 is pivoted so that with its free end 28 it engages by wedge action the recess 15b in the second cam portion 14b of the cam 14. The recess 15b is designed so that the combination of the own weight of the arm 16 and the own weight of the support leg 2 results in a "self-locking" wedge action between the arm 16 and the recess 15b. In order to prevent unnecessary stress on the arrangement which especially arises during transport of the load carrier, it is preferred for the support leg 2 at its lower end 12 to be supported by a lock catch 32 which is shown in Fig. 1 and which will not be described in detail.

When the support leg 2 is to be lowered, the support leg 2 is first released from the lock catch 32, after which the support leg 2 is easily raised. At the same time the arm 16 is slightly pivoted upwards by the handle 31 of the locking device 17, so that the free end 28 of the arm 16 is temporarily allowed to go clear of the recess 15b. During this movement, the wedge action between the arm 16 and the recess 15b is released, the arm 16 being freely allowed to be pivoted upwards so that the support leg 2 can be pivoted downwards towards its extended position. With reference to Fig. 4b, the support leg 2 is shown in an intermediate position during this pivoting movement (see arrow A). By its own weight, or alternatively in combination with a lever spring (not shown) arranged between the arm 16 and the second axis 25, the arm 16 will, during this pivoting movement towards the extended position, engage and follow the cam 14 until the arm 16 engages the recess 15a in the second cam portion 14a, when the support leg 2 reaches its extended position, which is shown in Fig. 4c. Once in the recess 15a, the arm 16 will, by a new wedge action, engage the recess 15a and lock the support leg 2 in its extended position. In this position, the supporting surface 34 engages the web 7 of the hinge means 3, whereby this engagement takes up most of the vertical forces.

With reference to Fig. 2, the support leg 2 has during its pivoting movement to its extended position preferably been pivoted to such an extent that the longitudinal axis L of the support leg 2 has been pivoted past, and passed, the vertical axis V and preferably makes an angle α in the range 2-5°, more preferred 3-4°, to this. In other words the support leg 2 will in the extended position, when the load carrier has been put down on the ground, stand at an angle α to the vertical axis V of the support leg 2. Such "excessive pivoting" facilitates handling when the support leg 2 is again to be pivoted to its retracted position. When the load carrier is again raised, the longitudinal axis L of the support leg 2 will, by the own weight of the support leg 2, coincide with the vertical axis V. This means that a play corresponding to the angle α is formed, within which the support leg 2 can be moved by manual power. By gripping the support leg 2 and pressing it past the vertical axis V, the arm 16 is released from its wedge action with the recess 15a. At the same time as the support leg 2 is kept in this excessively pivoted position, the handle of the locking device 17 is gripped and moved so that the arm 16 is pivoted upwards, whereby it is temporarily released from its engagement with the recess 15a. With reference to Fig. 4d, the support leg 2 can now be freely pivoted towards its retracted position, see arrow B, while at the same time the arm 16 is released. When the handle of the locking device is released, the arm 16 will by its own weight fall back into engagement with the cam 14 and, by its own weight, or alternatively a lever spring (not shown), follow the profile thereof until the support leg 2 reaches its retracted position, in which the arm 16 falls into the recess 15b in the second cam portion 14b and, thus, locks the support leg 2, see once more Fig. 4a.

It will be appreciated by a person skilled in the art that the cam 14 and the recesses 15a, 15b can be given various profiles with the cooperation between the arm 16 and the cam 14 maintained, to obtain the locking of the support leg 2 at least in its extended position. In other words, the invention is in no way restricted to a specific cam profile or recess profile, as the one described above.

Referring once more to Fig. 2, the support leg 2 can at its upper end 8 have a bevel 33 of the corner on the side of the support leg 2 opposite to the long side 18 with the first cam portion 14a. The bevel 33 means that the support leg 2, when pivoted about the first axis 4 of the hinge means 3, can be arranged very close to the web 7 of the hinge means 3 and still be pivoted freely. This allows a reduction of the overall height, i.e. the distance between the load carrier and the truck.

In the description above, the arrangement has been designed so that the support leg is arranged to pivot about a first axis and cooperate with an arm which is pivotable about a second axis. In this case, the cam is arranged in the support leg and the two axes form separate axes. This is merely one conceivable embodiment. In a possible embodiment (not shown), the two axes may coincide in one axis. In this case, the common axis constitutes the previously first axis, i.e. the axis about which the support leg is pivotable. In such a solution, the arm is arranged on this axis while the cam is arranged in the hinge means.

It will be appreciated that the present invention is not limited to the shown embodiment of the inventive arrangement. Several modifications and variants are thus conceivable, and consequently the invention is defined exclusively by the appended claims.

## Claims

1. An arrangement in connection with a support leg (2) for a load carrier, such as a loading platform, said support leg (2) being connected to a hinge means (3) arranged on the load carrier for movement between an inwards folded or retracted position and an outwards folded or extended position by pivoting about a first axis (4), the arrangement comprising a locking device (17) for locking the support leg (2) at least in the extended position,
**characterised in that** the locking device (17) comprises an arm (16) which is arranged on the hinge means (3) and pivotable about a second axis (25) which is parallel to the first axis (4), said arm (16) being adapted to lock the support leg (2) in the outwards folded position by interaction with a recess (15a) formed in a cam (14) on the support leg (2).

2. An arrangement as claimed in claim 1, in which the arm (16) in the outwards folded position of the support leg (2) is adapted to lock, by wedge action, the support leg (2) against the recess (15a) formed in the cam (14).

3. An arrangement as claimed in claim 1, in which the arm (16) is arranged so as to strive, by its own weight, towards engagement with the cam (14) and its recess (15a).

4. An arrangement as claimed in claim 1, in which the arm (16) is adapted to cooperate with a lever spring which arranges the arm (16) in engagement with the cam (14) and its recess (15a).

5. An arrangement as claimed in claim 1, in which the support leg (2) in its outwards folded position makes an angle (α) to a vertical axis (V) in the range 2-5°, and most preferred 3-4°.

6. An arrangement as claimed in claim 1, in which the cam (14) comprises an additional recess (15b) which, by interaction with the arm (16), also can lock the support leg (2) in the inwards folded position.

7. An arrangement as claimed in claim 6, in which the arm (16) in the inwards folded position of the support leg (2) is adapted, by wedge action, to lock the support leg (2) against the additional recess (15b) arranged in the cam (14).

8. An arrangement as claimed in claim 1, in which the first axis (4) and the second axis (25) coincide in a common axis.

9. Use of an arrangement having features as stated in any one of claims 1-8.

## Patentansprüche

1. Anordnung in Verbindung mit einem Stützbein (2) für einen Lastträger, wie eine Ladebühne, wobei das Stützbein (2) mit einem Gelenkmittel (3) verbunden ist, das auf dem Lastträger zur Bewegung zwischen einer nach innen gefalteten oder eingefahrenen Position und einer nach außen gefalteten oder ausgefahrenen Position durch Schwenken über eine erste Achse (4) angeordnet ist, wobei die Anordnung eine Feststellvorrichtung (17) zum Feststellen des Stützbeins (2) zumindest in der ausgefahrenen Position umfasst,
**dadurch gekennzeichnet, dass** die Feststellvorrichtung (17) einen Arm (16) umfasst, welcher auf dem Gelenkmittel (3) angeordnet und schwenkbar über eine zweite Achse (25) ist, welche parallel zu der ersten Achse (4) ist, wobei der Arm (16) angepasst ist, um das Stützbein (2) in der nach außen gefalteten Position durch Interaktion mit einer in einer Schaltnocke (14) auf dem Stützbein (2) gebildeten Vertiefung (15a) festzustellen.

2. Anordnung gemäß Anspruch 1, in welcher der Arm (16) in der nach außen gefalteten Position des Stützbeines (2) angepasst ist, um, durch Keilwirkung, das Stützbein (2) gegen die in der Schaltnocke (14) gebildete Vertiefung (15a) festzustellen.

3. Anordnung gemäß Anspruch 1, in welcher der Arm (16) angeordnet ist, um, durch sein eigenes Gewicht, nach Eingriff mit der Schaltnocke (14) und ihrer Vertiefung (15a) zu streben.

4. Anordnung gemäß Anspruch 1, in welcher der Arm (16) angepasst ist, um mit einer Hebelfeder zusammenzuwirken, welche den Arm (16) in Eingriff mit der Schaltnocke (14) und ihrer Vertiefung (15a) anordnet.

5. Anordnung gemäß Anspruch 1, in welcher das Stützbein (2) in seiner nach außen gefalteten Position einen Winkel (α) zu einer vertikalen Achse (V) in dem Bereich 2-5° und meist bevorzugt 3-4° bildet.

6. Anordnung gemäß Anspruch 1, in welcher die Schaltnocke (14) eine zusätzliche Vertiefung (15b) umfasst, welche, durch Interaktion mit dem Arm (16), das Stützbein (2) auch in seiner nach innen gefalteten Position feststellen kann.

7. Anordnung gemäß Anspruch 6, in welcher der Arm (16) in der nach innen gefalteten Position des Stützbeines (2) angepasst ist, um, durch Keilwirkung, das Stützbein (2) gegen die zusätzliche in der Schaltnocke (14) angeordnete Vertiefung (15b) festzustellen.

8. Anordnung gemäß Anspruch 1, in welcher die erste Achse (4) und die zweite Achse (25) in einer gemeinsamen Achse zusammentreffen.

9. Verwendung einer Anordnung, die Merkmale, wie in einen der Ansprüche 1-8 festgesetzt, besitzt.

## Revendications

1. Dispositif en rapport avec un pied de support (2) pour un porte-charge, tel qu'une plateforme de chargement, ledit pied de support (2) étant relié à un moyen de charnière (3) agencé sur le porte-charge pour un mouvement entre une position pliée vers l'intérieur ou rétractée et une position pliée vers l'extérieur ou étendue en pivotant autour d'un premier axe (4), le dispositif comprenant un dispositif de blocage (17) pour bloquer le pied de support (2) au moins dans la position étendue, **caractérisé en ce que** le dispositif de blocage (17) comprend un bras (16) qui est agencé sur le moyen de charnière (3) et capable de pivoter autour d'un second axe (25) qui est parallèle au premier axe (4), ledit bras (16) étant conçu pour bloquer le pied de support (2) dans la position pliée vers l'extérieur par interaction avec un évidement (15a) formé dans une came (14) sur le pied de support (2).

2. Dispositif selon la revendication 1, dans lequel le bras (16) dans la position pliée vers l'extérieur du pied de support (2) est conçu pour bloquer, par coinçage, le pied de support (2) contre l'évidement (15a) formé dans la came (14).

3. Dispositif selon la revendication 1, dans lequel le bras (16) est agencé de façon à chercher à venir se mettre en prise, par son propre poids, avec la came (14) et son évidement (15a).

4. Dispositif selon la revendication 1, dans lequel le bras (16) est conçu pour coopérer avec un ressort levier qui dispose le bras (16) en prise avec la came (14) et son évidement (15a).

5. Dispositif selon la revendication 1, dans lequel le pied de support (2) dans sa position pliée vers l'extérieur forme un angle (α) par rapport à un axe vertical (V) dans la gamme de 2 à 5°, et plus préférablement 3 à 4°.

6. Dispositif selon la revendication 1, dans lequel la came (14) comprend un évidement supplémentaire (15b) qui, par interaction avec le bras (16), peut également bloquer le pied de support (2) dans la position pliée vers l'intérieur.

7. Dispositif selon la revendication 6, dans lequel le bras (16) dans la position pliée vers l'intérieur du pied de support (2) est conçu, par coinçage, pour bloquer le pied de support (2) contre l'évidement supplémentaire (15b) agencé dans la came (14).

8. Dispositif selon la revendication 1, dans lequel le premier axe (4) et le second axe (25) coïncident dans un axe commun.

9. Utilisation d'un dispositif ayant les caractéristiques mentionnées dans l'une quelconque des revendications 1 à 8.
